# EUROPÄISCHE PATENTSCHRIFT

(11) **EP 3 767 108 B1**
(45) Veröffentlichungstag und Bekanntmachung des Hinweises auf die Patenterteilung: **02.06.2021**
(21) Anmeldenummer: 19186221.8
(22) Anmeldetag: 15.07.2019
(51) Int. Cl.: F04D 19/04, B01D 3/10, F04C 25/02, F04D 29/063, F04B 37/14, F04B 39/02, F04B 39/16, F04C 23/00, F04C 29/02, F04C 18/344

(54) **VAKUUMGERÄT**
VACUUM DEVICE
APPAREIL À VIDE

(43) Veröffentlichungstag der Anmeldung: 20.01.2021
(73) Patentinhaber: PFEIFFER VACUUM GMBH, 35614 Asslar (DE)
(72) Erfinder: Steffen, Herrmann, 35102 Lohra (DE)
(74) Vertreter: Manitz Finsterwald Patent- und Rechtsanwaltspartnerschaft mbB

(56) Entgegenhaltungen:
- JP-A- H06 193 564
- JP-A- S59 160 088
- JP-B1- S5 029 162
- KR-B1- 101 424 532
- US-A- 3 698 515

## Beschreibung

Die vorliegende Erfindung betrifft ein Vakuumgerät, nämlich eine Vakuumpumpe, mit einem Reservoir für ein Betriebsmittel und einem am oder im Reservoir angeordneten Ausgangsanschluss. Konkret betrifft die Erfindung ein Vakuumgerät nach dem Oberbegriff des Anspruchs 1. Ein solches ist in der US 3 698 515 A offenbart. Weiteren Stand der Technik bilden die JP S50 29162 B1, die JP H06 193564 A und die JP S59 160088 A.

Beim Betrieb von Vakuumgeräten kommen häufig Betriebsmittel, wie etwa Öl, zum Einsatz. Drehschieberpumpen beispielsweise werden häufig mit einem Ölnebelabscheider am Auspuffstutzen ausgestattet. Dieser funktioniert z.B. nach dem Koaleszenzprinzip und scheidet Öldampf und/oder Öltröpfchen aus dem Abgasstrom ab. Das flüssige Öl sammelt sich am Boden des Abscheiders und wird in der Regel durch einen Schlauch mit einem unter Vakuum stehenden Teil der Drehschieberpumpe verbunden und in diese zurückgesaugt. So wird eine Betriebsmittel- bzw. Ölrückführeinrichtung gebildet. Es kann vorkommen, dass auch Wasserdampf und Wassertröpfchen abgeschieden werden und sich als Wasser in einem Betriebsmittelreservoir sammeln. Eine Rückförderung von Wasser ist meist unerwünscht, da es die Pumpe durch Korrosion schädigen und die Qualität des Öls beeinträchtigen kann.

Es ist eine Aufgabe der Erfindung, bei einem Vakuumgerät der eingangs genannten Art die Lebensdauer zu verbessern.

Diese Aufgabe wird durch ein Vakuumgerät nach Anspruch 1 gelöst und insbesondere dadurch, dass das Vakuumgerät eine Selektionseinrichtung umfasst, die dazu ausgebildet ist, den Ausgangsanschluss oder eine über den Ausgangsanschluss an das Reservoir angebundene Ausgangsleitung selektiv in Abhängigkeit davon zu schließen oder zu öffnen, ob am Ausgangsanschluss Betriebsmittel oder Wasser ansteht, sodass der Ausgangsanschluss geschlossen wird, wenn Wasser an ihm ansteht, und der Ausgangsanschluss geöffnet wird, wenn Betriebsmittel an ihm ansteht.

Durch die Selektionseinrichtung wird ausgenutzt, dass Betriebsmittel, meist Öl, und Wasser im Reservoir unterschiedliche Phasen mit einer relativ präzisen Phasengrenze bilden. Dabei schwimmt insbesondere das Betriebsmittel oben auf dem Wasser. Die Phasengrenze verschiebt sich in ihrer Höhe in Abhängigkeit von der Wassermenge im Reservoir. Diese relativ eindeutige Trennung von Betriebsmittel und Wasser lässt sich erfindungsgemäß mit einfachen Mitteln dazu ausnutzen, dass das Wasser nicht zu Teilbereichen des Vakuumgerätes gelangt, in denen es unerwünscht ist, wie etwa einem Schöpfraum einer Vakuumpumpe. Somit wird das Vakuumgerät vor Korrosion geschützt und die Lebensdauer wird verbessert. Auch wird die Qualität des Betriebsmittels verbessert, was sich positiv auf Reibungen im Vakuumgerät auswirkt und somit ebenfalls die Lebensdauer, insbesondere von beweglichen Teilen und ihren Reibpartnern verbessert.

Insoweit im Folgenden davon die Rede ist, dass der Ausgangsanschluss geöffnet oder geschlossen wird, versteht es sich auch dort, wo es nicht gesondert erwähnt ist, dass der Ausgangsanschluss unmittelbar geöffnet oder geschlossen, etwa abgedeckt, werden kann oder auch eine hieran angeschlossene Ausgangsleitung geöffnet oder geschlossen werden kann, z.B. über ein Ventil. Denn über eine Ausgangsleitung kann der Ausgangsanschluss zumindest mittelbar geöffnet und geschlossen werden.

Gemäß der Erfindung ist vorgesehen, dass der Ausgangsanschluss das Reservoir mit einer Betriebsmittelrückführeinrichtung verbindet. Dabei wird der

Ausgangsanschluss dann geschlossen, wenn Wasser am Ausgangsanschluss ansteht. Es kann also insbesondere direkt die Rückführung von Wasser verhindert werden.

Der Ausgangsanschluss kann beispielsweise über die Ausgangsleitung mit einem Unterdruckbereich des Vakuumgeräts verbunden sein. Hierdurch wird das im Reservoir vorhandene Fluid angesaugt. So kann beispielsweise auf einfache Weise eine Betriebsmittelrückführung realisiert werden. Insbesondere wird jedoch das Ansaugen verhindert, wenn Wasser am Ausgangsanschluss ansteht, indem der Ausgangsanschluss durch die Selektionseinrichtung geschlossen wird. Außerdem wird der Ausgangsanschluss insbesondere geöffnet, wenn Betriebsmittel an ihm ansteht.

Es kann beispielsweise ein zweiter Ausgangsanschluss vorgesehen sein, der ein Ablassanschluss ist. Ein solcher dient insbesondere dem Abführen oder Ablassen von Wasser, kann aber beispielsweise auch zum Ablassen von Betriebsmittel nutzbar sein. Insbesondere wird der Ablassanschluss von einer Selektionseinrichtung geöffnet, wenn Wasser an ihm ansteht und/oder geschlossen, wenn Betriebsmittel an ihm ansteht. Der zweite Ausgangs- und/oder Ablassanschluss kann bevorzugt an einer tiefsten Stelle des Reservoirs angeordnet sein.

Es können am oder im Reservoir auch beispielsweise wenigstens zwei Ausgangsanschlüsse angeordnet sein. Dabei ist wenigstens einer der Ausgangsanschlüsse durch die Selektionseinrichtung selektiv öffen- oder schließbar, wie es durch die Erfindung vorgeschrieben wird. Es können auch für beide Ausgangsanschlüsse Selektionseinrichtungen vorgesehen sein. Alternativ kann beispielsweise eine gemeinsame Selektionseinrichtung vorgesehen sein, insbesondere eine solche mit einem Schwimmer, der selektiv in Abhängigkeit von der Höhe der Phasengrenze zwischen Betriebsmittel und Wasser entweder den einen oder den anderen Ausgangsanschluss verschließt, insbesondere abdeckt. Generell können zwei Ausgangsanschlüsse vorgesehen sein, wobei ein Ausgangsanschluss für das Betriebsmittel vorgesehen ist und wobei ein Ausgangsanschluss für das Wasser vorgesehen ist.

Im Allgemeinen ist durch die erfinderische Selektionseinrichtung eine automatische Rückführsperre gegen Wasser gebildet und ein automatischer Wasserablass kann zusätzlich hinzugefügt werden.

Das Vakuumgerät wird durch beide vorstehenden Varianten besonders gut vor Korrosion und Betriebsmittelbeeinträchtigung geschützt und dies jeweils mit besonders einfachen Mitteln.

Der Ausgangsanschluss kann bevorzugt nach unten oder oben ausgerichtet sein. Generell kann der Ausgangsanschluss beispielsweise in einer Wand des Reservoirs ausgebildet sein oder durch eine Leitung, die sich in das Reservoir hinein erstreckt, beispielsweise durch eine Wand des Reservoirs hindurch. Der Ausgangsanschluss kann insbesondere an einer tiefsten Stelle des Reservoirs angeordnet sein.

Die Selektionseinrichtung kann beispielsweise einen Schwimmer umfassen. Dieser kann insbesondere dazu ausgebildet sein, an einer Phasengrenze zwischen Wasser und Betriebsmittel zu schwimmen. Dabei kann die Selektionseinrichtung dazu ausgebildet sein, den Ausgangsanschluss oder die Ausgangsleitung in Abhängigkeit von der Schwimmhöhe des Schwimmers entweder zu schließen oder zu öffnen. Insbesondere kann der Schwimmer so ausgebildet sein, dass er in Betriebsmittel absinkt und in Wasser aufsteigt. Der Schwimmer kann beispielsweise eine Dichte aufweisen, die zwischen der Dichte des Betriebsmittels und der Dichte von Wasser liegt. Somit kann auf einfache Weise erreicht werden, dass der Schwimmer an der Phasengrenze schwimmt. Generell kann der Schwimmer z.B. eine Kugelform aufweisen.

Bei einer Weiterbildung ist der Schwimmer selbst dazu ausgebildet, den Ausgangsanschluss zu verschließen, insbesondere mit einem Hohl- und/oder Kugelkörper. Es muss somit kein zusätzliches Ventil vorgesehen werden und die Selektionseinrichtung ist besonders einfach und damit kostengünstig ausgeführt. Der Schwimmer kann den Ausgangsanschluss beispielsweise durch Anliegen am Ausgangsanschluss verschließen. Am Ausgangsanschluss kann beispielsweise eine Dichtung, insbesondere Ringdichtung, zur Anlage mit dem Schwimmer im geschlossenen Zustand vorgesehen sein. Allgemein kann der Schwimmer den Ausgangsanschluss verschließen, wenn er zusammen mit der Phasengrenze den Ausgangsanschluss erreicht. Generell kann der Schwimmer den Ausgangsanschluss mit einem hohlen, leichtesten und/oder kugelförmigen Abschnitt verschließen, wobei dies jedoch nicht zwingend ist. Ein Verschlussabschnitt kann beispielsweise auch an einem Hebel getrennt von einem hohlen, leichtesten und/oder kugelförmigen Abschnitt vorgesehen sein. Die Selektionseinrichtung dieser Weiterbildung ist besonders einfach herzustellen und funktioniert insbesondere selbsttätig, und zwar ohne die Notwendigkeit einer elektronischen Steuerung. Somit ist die Selektionseinrichtung auch besonders wartungsarm und kostengünstig, sowohl in der Herstellung als auch im Betrieb.

Die Selektionseinrichtung kann beispielsweise eine Positioniereinrichtung für den Schwimmer aufweisen. Hierdurch wird eine besonders zuverlässige Positionierung und insbesondere ein besonders sicheres Schließen ermöglicht. Die Positioniereinrichtung kann insbesondere dazu ausgebildet sein, den Schwimmer unter oder über dem Ausgangsanschluss zu positionieren, zumindest in einem Höhenbereich nahe des Ausgangsanschlusses. Die Positioniereinrichtung kann beispielsweise einen Hebel oder einen Käfig umfassen. Beispielsweise kann die Positioniereinrichtung aber auch durch eine Wand des Reservoirs gebildet sein. So kann die Wand z.B. zum Ausgangsanschluss zulaufend, insbesondere kegelförmig, ausgebildet sein.

Die Selektionseinrichtung kann alternativ oder zusätzlich vorteilhafterweise einen Schalter aufweisen, welcher z.B. durch den Schwimmer betätigbar sein kann. Dies ermöglicht ebenfalls eine relativ einfache Ausgestaltung einer Selektionseinrichtung. Der Schalter kann beispielsweise zum Schalten eines Schaltventils am Ausgangsanschluss oder an oder in der Ausgangsleitung betätigbar sein. Alternativ oder zusätzlich kann der Schalter zum An- und/oder Ausschalten des Vakuumgerätes und/oder anderer Funktionseinheiten betätigbar sein. Somit kann beispielsweise auf besonders einfache Weise eine Sicherheitsabschaltung für den Fall implementiert werden, dass eine Betriebsmittel-Rückführleitung gesperrt ist. Generell kann der Schalter beispielsweise auch mit einer Warneinheit, wie etwa einer Warnleuchte oder einem Tongeber, verbunden sein. Der Benutzer des Vakuumgerätes kann so auf einfache und zuverlässige Weise über einen nachteiligen Füllstand, insbesondere von Wasser, in dem Reservoir informiert werden.

Die Selektionseinrichtung kann beispielsweise einen Sensor zum Ermitteln einer Füllstandsinformation aufweisen. Der Sensor kann beispielsweise zum Ermitteln eines Füllstandes als Skalenwert ausgebildet sein. Ein solcher Sensor kann auch als kontinuierlicher Sensor bezeichnet werden. Alternativ kann der Sensor beispielsweise dazu ausgebildet sein, ein Vorhandensein von Wasser und/oder Betriebsmittel am Sensor zu ermitteln. Ein solcher Sensor wird hierin als binärer Sensor bezeichnet. Ein binärer Sensor kann beispielsweise die Füllstandinformation aus einer elektrischen Leitfähigkeit eines Mediums, also Wasser oder Betriebsmittel, am Sensor ableiten. Der binäre Sensor kann z.B. auch als kapazitiver Sensor ausgebildet sein. Der Sensor kann generell beispielsweise die Füllstandsinformation aus einer Position, insbesondere Höhe, eines Schwimmers ableiten.

Bei einer weiteren Ausführungsform ist vorgesehen, dass die Selektionseinrichtung ein Schaltventil am Ausgangsanschluss oder an oder in der Ausgangsleitung aufweist. Die Selektionseinrichtung kann dabei bevorzugt dazu ausgebildet sein, das Schaltventil in Abhängigkeit von der Füllstandsinformation zu schalten. Diese Ausführung stellt eine weitere einfach ausgeführte Selektionseinrichtung bereit. Außerdem bietet sie den Vorteil, dass eine besonders einfache Integration der Selektionseinrichtung in eine gegebenenfalls bestehende Steuerungseinrichtung des Vakuumgerätes ermöglicht wird. So können die Sensordaten beispielsweise von der Steuerungseinrichtung genutzt werden und/oder das Schaltventil kann durch die Steuerungseinrichtung auch unabhängig von der Füllstandinformation ansteuerbar sein. Das Schaltventil kann beispielsweise als Magnetventil ausgebildet sein.

Der Ausgangsanschluss kann generell beispielsweise sensorabhängig geöffnet oder geschlossen werden. Alternativ kann beispielsweise dem Benutzer zu erkennen gegeben werden, ob die Selektionseinrichtung den Ausgangsanschluss gerade offen oder geschlossen hält, z.B. ob ein Schwimmer gerade am Ausgangsanschluss anliegt und ihn so verschließt oder nicht. Abhängig hiervon kann der Benutzer des Vakuumgeräts eine Maßnahme treffen, z.B. das Vakuumgerät abschalten und/oder Wasser manuell ablassen. Beide Maßnahmen können auch automatisch, insbesondere sensorabhängig, durchführbar sein.

Ein, insbesondere binärer, Sensor kann beispielsweise, insbesondere leicht, unterhalb oder oberhalb von einen Ausgangsanschluss im oder am Reservoir angeordnet sein. So kann auf einfache Weise ermittelt werden, ob am Ausgangsanschluss Betriebsmittel oder Wasser vorhanden ist und in Abhängigkeit hiervon eine Maßnahme getroffen werden, beispielsweise der Ausgangsanschluss gesperrt oder geöffnet werden.

Das Reservoir kann beispielsweise ein Schauglas aufweisen, insbesondere zum Anzeigen eines Flüssigkeits-Füllstandes, insbesondere Betriebsmittel- und/oder Wasser-Füllstandes, im Reservoir. Hierdurch erlangt der Bediener eine direkte Information über den Füllstand und kann Maßnahmen in Abhängigkeit hiervon treffen. Das Schauglas kann insbesondere auf Höhe des Ausgangsanschlusses, insbesondere eines Ausgangsanschlusses für Betriebsmittel, angeordnet sein. belabscheider und/oder Koaleszenzabscheider, aufweisen. Der Betriebsmittelabscheider kann bevorzugt zum Abscheiden des Betriebsmittels aus einem Gasstrom, insbesondere Abgasstrom, in das Reservoir angeordnet sein.

Bei dem Vakuumgerät kann es sich insbesondere um eine Vakuumpumpe handeln, insbesondere um eine Rotationsverdränger-Vakuumpumpe, beispielsweise eine Drehschieber-Vakuumpumpe. Die Vakuumpumpe kann beispielsweise ölgeschmiert sein. Das Betriebsmittel kann im Allgemeinen beispielsweise Öl aufweisen oder sein.

Die Erfindung wird nachfolgend lediglich beispielhaft anhand der schematischen Zeichnung erläutert.
- Fig. 1 und 2: zeigen eine Ausführungsform der Erfindung mit einem Betriebsmittelreservoirs und einer Selektionseinrichtung in zwei unterschiedlichen Betriebszuständen.
- Fig. 3: zeigt eine weitere Ausführungsform einer Selektionseinrichtung, die nicht gemäß der Erfindung ist.
- Fig. 4: zeigt eine dritte Ausführungsform einer Selektionseinrichtung, die gemäß der Erfindung ist.

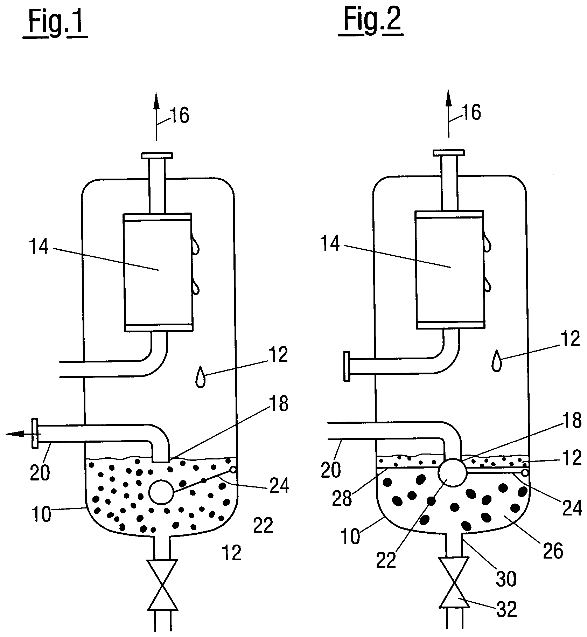

In den Fig. 1 und 2 ist jeweils ein Reservoir 10 zur Aufnahme eines Betriebsmittels 12 gezeigt, welches über einen Betriebsmittelabscheider 14 aus einem Gasstrom 16 abgeschieden wird. Die in den Fig. 1 und 2 gezeigte Anordnung ist Teil eines ansonsten nicht näher dargestellten Vakuumgerätes, zum Beispiel einer Vakuumpumpe. Bei dem Gasstrom 16 handelt es sich insbesondere um einen Abgasstrom einer solchen Vakuumpumpe.

Im Reservoir 10 ist ein Ausgangsanschluss 18 angeordnet, der über eine Ausgangsleitung 20 mit einem Unterdruckbereich des Vakuumgerätes verbunden ist. Solange der Ausganganschluss 18 im Betriebsmittel 12 eingetaucht ist und nicht gesperrt ist, wird Betriebsmittel 12 durch den Ausgangsanschluss 18 und die Ausgangsleitung 20 angesaugt und somit zu einem Bestimmungsort gefördert. Insbesondere ist hierdurch eine Betriebsmittelrückführung realisiert.

Im Reservoir ist ein Schwimmer 22 vorgesehen, der über einen Hebel 24 relativ zum Ausgangsanschluss 18 positioniert ist, wenn sich der Schwimmer 22 dem Ausganganschluss 18 nähert bzw. in dessen Höhenbereich angeordnet ist.

Der Schwimmer 22 weist eine Dichte zwischen der Dichte des Betriebsmittels 12 und der Dichte von Wasser auf. Im Betriebszustand, wie er in Fig. 1 dargestellt ist, ist kein Wasser im Reservoir 10 vorhanden und der im Betriebsmittel 12 befindliche Schwimmer 22 sinkt ab, gegebenenfalls bis zu einer Begrenzung.

In Fig. 2 ist hingegen ein Betriebszustand dargestellt, bei dem sich eine relativ große Menge Wasser 26 im Reservoir 10 gesammelt hat. Der Schwimmer 22 schwimmt aufgrund seiner Dichte an einer Phasengrenze 28 zwischen dem Betriebsmittel 12 und dem Wasser 26.

In Fig. 2 ist im Reservoir 10 so viel Wasser vorhanden, dass die Phasengrenze 28 bzw. der Schwimmer 22 auf Höhe des Ausgangsanschlusses 18 angeordnet sind. Dabei befindet sich der Schwimmer 22 in Anlage mit dem Ausganganschluss 18 und verschließt diesen selbst.

In dem in Fig. 2 gezeigten Zustand sind also Ausgangsanschluss 18 und Ausgangsleitung 20 geschlossen bzw. gesperrt. Es kann kein Wasser 26 in die Ausgangsleitung 20 gelangen.

Dieser gesperrte Zustand kann einem Benutzer beispielsweise über einen nicht dargestellten Schalter oder Sensor oder über ein Schauglas zur Kenntnis gebracht werden. Der Benutzer kann dann einen Ablassanschluss 30 bzw. ein dem Ablassanschluss 30 zugeordnetes Ventil 32 öffnen, um das Wasser 26 abzulassen. Hierdurch wird einerseits das überschüssige Wasser 26 entfernt und andererseits der Ausgangsanschluss 18 wieder geöffnet, da der Schwimmer 22 der Phasengrenze 28 beim Ablassen nach unten folgt. Das Ablassventil 32 kann beispielsweise auch automatisch, zum Beispiel in Abhängigkeit von einem Schalter oder einem Sensor, betätigbar sein und/oder als Schaltventil ausgebildet sein.

Auf das Ventil 32 kann beispielsweise auch verzichtet werden, wenn der Schwimmer 22 außerdem selbst dazu ausgebildet ist, den Ausgangsanschluss 30 zu verschließen, wenn sich die Phasengrenze 28 bei dem Ausgangsanschluss 30 befindet oder ausschließlich Betriebsmittel 12 vorhanden ist und der Schwimmer 22 im Betriebsmittel 12 nach unten sinkt. Für diesen Fall kann bevorzugt anstelle des Hebels 24 als Positioniereinrichtung ein Käfig vorgesehen sein, der beispielsweise den Schwimmer 22 vertikal führt. Grundsätzlich müssen aber die Ausganganschlüsse 18 und 30 nicht vertikal fluchtend übereinander angeordnet sein. Generell kann auch eine Selektionseinrichtung lediglich für den Ablassanschluss 30 vorgesehen sein.

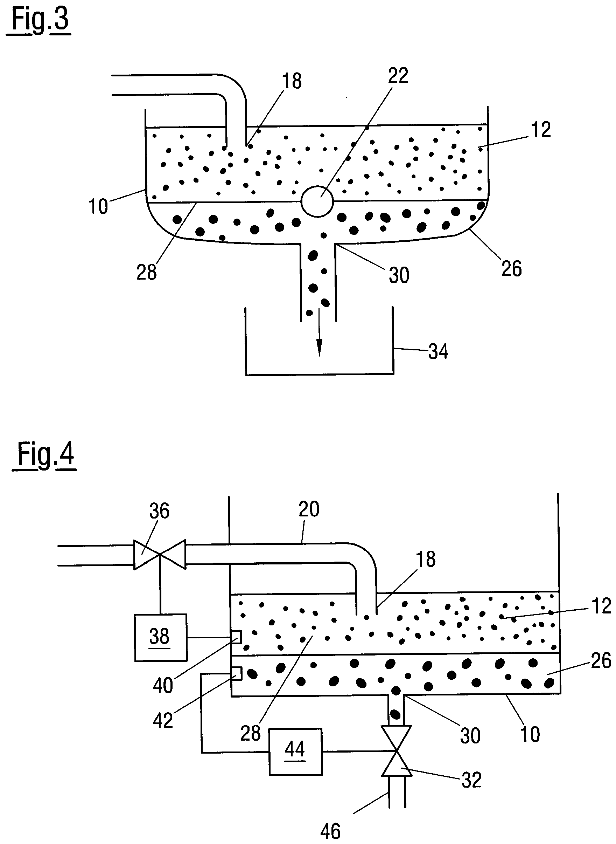

Eine weitere Ausführungsform von Reservoir und Selektionseinrichtung ist in Fig. 3 gezeigt. Es ist ein Reservoir 10 mit Ausgangsanschlüssen 18 und 30 vorgesehen. Ein Schwimmer 22 ist durch eine nicht dargestellte Positioniereinrichtung oberhalb von einem nach oben ausgerichteten Ausgangsanschluss 30 angeordnet. Im Gegensatz zu der Erfindung wird Ausgangsanschluss 30 geöffnet, wenn Wasser an ihm ansteht und wird er geschlossen, wenn Betriebsmittel an ihm ansteht. Diese Ausführung ist daher nicht gemäß der Erfindung.

In Fig. 3 befindet sich die Phasengrenze 28 zwischen den Ausgangsanschlüssen 18 und 30. An der Phasengrenze 28 schwimmt der Schwimmer 22.

Der Schwimmer 22 ist dazu ausgebildet, den Ausgangsanschluss 30 in Anlage mit demselben zu verschließen. Beim in Fig. 3 dargestellten Betriebszustand ist der Schwimmer 22 jedoch durch eine relativ große Menge Wasser angehoben, so dass der Ausgangsanschluss 30 offen ist. Das Wasser 26 kann somit abfließen, zum Beispiel in einen Abwasserbehälter 34. Das Wasser 26 wird also durch die Selektionseinrichtung selbsttätig abgelassen.

Die Figuren sind nicht maßstabsgerecht und es versteht sich, dass sich im Betrieb der Ausführungsform gemäß Fig. 3 der Schwimmer 22 meist nur geringfügig anheben und einen vergleichsweise kleinen Spalt am Ausgangsanschluss 30 öffnen wird, da das Wasser 26 quasi ständig abläuft und sich im Wesentlichen keine große Menge Wasser sammeln kann. Die in Fig. 3 gezeigte relativ große Höhe des Schwimmers 22 dient also nur der Illustration.

Ähnlich wie in der Ausführungsform der Fig. 1 und 2 ist der Ausgangsanschluss 18 der Fig. 3 mit einem Unterdruckbereich verbunden und saugt das Betriebsmittel 12 zu einem Bestimmungsort. Da die Selektionseinrichtung bzw. der Schwimmer 22 hier nur am Ausgangsanschluss 30 wirksam ist, wird der Ausgangsanschluss 18 im Wesentlichen nie verschlossen. Hierdurch kann beispielsweise eine besonders zuverlässige Betriebsmittelrückführung realisiert werden. Es ist aber auch denkbar, dass, gemäß der Erfindung, der Schwimmer 22 auch dazu ausgebildet ist, den Ausgangsanschluss 18 zu verschließen, wenn die Phasengrenze 28 sich auf dessen Höhe befindet ist. Auch kann ein zusätzlicher Schwimmer oder eine andersartige Selektionseinrichtung vorgesehen sein. Neben dem weitgehend permanenten Ablassen von Wasser 26 gemäß Fig. 3 kann somit beispielsweise eine redundant wirksame Selektionseinrichtung geschaffen werden, zum Beispiel um besonders sicheren Schutz vor Korrosion zu bieten.

Eine Ausführungsform ohne Schwimmer ist in Fig. 4 gezeigt, wobei aber zusätzlich auch Schwimmer vorgesehen werden könnten. In einem Reservoir 10 sind Betriebsmittel 12 und Wasser 26 in Phasen getrennt vorhanden. Ein Ausganganschluss 18 ist in dem Betriebsmittel 12 eingetaucht angeordnet und saugt das Betriebsmittel 12 über eine Ausgangsleitung 20 zu einem Bestimmungsort, solange ein Schaltventil 36 geöffnet ist.

Das Schaltventil 36 wird über eine Betätigungseinrichtung 38 in Abhängigkeit von einem Sensor 40 geöffnet oder geschlossen. Bei dem Sensor 40 handelt es sich bevorzugt um einen binären Sensor im vorstehend beschriebenen Sinne, also um einen solchen, der ermittelt, ob bei ihm Betriebsmittel 12 oder Wasser 26 vorhanden ist. Der Sensor 40 kann zu diesem Zweck beispielsweise eine Leitfähigkeit oder eine Kapazität eines umgebenden Mediums messen. Alternativ oder zusätzlich könnte auch ein kontinuierlicher Sensor vorgesehen sein.

Mithilfe des Sensors 40 wird die erfinderische Wirkung erreicht. Der Sensor 40 ist leicht unterhalb vom Ausgangsanschluss 18 angeordnet. Wenn der Sensor 40 Wasser 26 als ihn umgebendes Medium detektiert, wenn also die Phasengrenze 28 eine gewisse Höhe erreicht hat, bewirkt die Betätigungseinrichtung 38 ein Verschließen des Schaltventils 36. Erst wenn der Sensor 40 wieder Betriebsmittel 12 detektiert, wird das Schaltventil 36 geöffnet. Somit ist ein Ansaugen von Wasser 26 über den Ausgangsanschluss 18 im Wesentlichen ausgeschlossen. Insbesondere eine leichte Höhendifferenz zwischen Ausgangsanschluss 18 und Sensor 40 kann einen Sicherheitsabstand zwischen der Phasengrenze und dem Ausgangsanschluss 18 bewirken. Somit wird ein Ansaugen von Wasser 26 im Wesentlichen komplett verhindert, zumindest abgesehen von Wasseranteilen, welche sich noch nicht vollständig von der Betriebsmittelphase 12 abgesetzt haben.

Mithilfe eines weiteren Sensors 42 wird die Wirkung gemäß der Ausführung der Figur 3 erreicht. Der Sensor 4 ist über eine weitere Betätigungseinrichtung 44 zur Steuerung eines Schaltventils 32 vorgesehen. Das Schaltventil 32 ist zum Sperren bzw. Öffnen einer Ablassleitung 46 und eines Ablass- bzw. Ausgangsanschlusses 30 vorgesehen. Das Schaltventil 32 wird über die Betätigungseinrichtung 44 in Abhängigkeit vom Sensor 42 im Wesentlichen umgekehrt im Vergleich zum Schaltventil 36 betätigt. Wenn also der Sensor 42 Wasser 26 detektiert, was der Darstellung der Fig. 4 entspricht, wird das Schaltventil 32 von der Betätigungseinrichtung 44 geöffnet und das Wasser 26 wird bis knapp unterhalb des Sensors 42 abgelassen. Denn dann detektiert der Sensor 42 wiederum Betriebsmittel 12 und das Schaltventil 32 wird geschlossen.

Es versteht sich, dass bereits eines der Schaltventile 36 bzw. 32 mit einem zugeordneten Sensor 40 bzw. 42 eine wirksame Selektionseinrichtung bildet. Beide Varianten können wie dargestellt aber auch gleichzeitig vorgesehen sein, beispielsweise zur Erzielung einer redundanten und besonders sicheren Selektionseinrichtung.

Während die in den Figuren gezeigten Beispiele lediglich ansaugende Ausgangsanschlüsse 18 für das Betriebsmittel 12 zeigen, versteht es sich, dass eine derartige Unterdruckförderung nicht unbedingt notwendig ist. Vielmehr kann ein Ausgangsanschluss 18 beispielsweise auch so angeordnet werden, dass das Betriebsmittel 12 durch ihn schwerkraftbedingt abfließen kann.

### Bezugszeichenliste

- 10: Reservoir
- 12: Betriebsmittel
- 14: Betriebsmittelabscheider
- 16: Gasstrom
- 18: Ausgangsanschluss
- 20: Ausgangsleitung
- 22: Schwimmer
- 24: Hebel
- 26: Wasser
- 28: Phasengrenze
- 30: Ausgangsanschluss
- 32: Ventil
- 34: Abwasserbehälter
- 36: Schaltventil
- 38: Betätigungseinrichtung
- 40: Sensor
- 42: Sensor
- 44: Betätigungseinrichtung
- 46: Ablassleitung

## Patentansprüche

1. Vakuumgerät, nämlich Vakuumpumpe, mit
einem Reservoir (10) für ein Betriebsmittel (12), einem am oder im Reservoir (10) angeordneten Ausgangsanschluss (18), wobei der Ausgangsanschluss (18) das Reservoir (10) mit einer Betriebsmittelrückführeinrichtung verbindet, und einer Selektionseinrichtung, die dazu ausgebildet ist, den Ausgangsanschluss (18) oder eine über den Ausgangsanschluss (18) an das Reservoir (10) angebundene Ausgangsleitung (20) selektiv in Abhängigkeit davon zu schließen oder zu öffnen, ob am Ausgangsanschluss (18) Betriebsmittel (12) oder Wasser (26) ansteht,
**dadurch gekennzeichnet, dass** der Ausgangsanschluss geschlossen wird, wenn Wasser an ihm ansteht, und der Ausgangsanschluss geöffnet wird, wenn Betriebsmittel an ihm ansteht.

2. Vakuumgerät nach Anspruch 1, wobei der Ausgangsanschluss (18) über die Ausgangsleitung (20) mit einem Unterdruckbereich verbunden ist.

3. Vakuumgerät nach zumindest einem der vorhergehenden Ansprüche, wobei der Ausgangsanschluss (18), der das Reservoir (10) mit der Betriebsmittelrückführeinrichtung verbindet, ein erster Ausgangsanschluss ist und wobei am oder im Reservoir (10) wenigstens ein zweiter Ausgangsanschluss (30), insbesondere mit einer entsprechenden an das Reservoir (10) angebundenen Ausgangsleitung (46), angeordnet ist, der ein Ablassanschluss ist.

4. Vakuumgerät nach zumindest einem der vorhergehenden Ansprüche, wobei zumindest einer der Ausgangsanschlüsse (18, 30) nach unten oder oben ausgerichtet ist.

5. Vakuumgerät nach zumindest einem der vorhergehenden Ansprüche, wobei die Selektionseinrichtung einen Schwimmer (22) umfasst, der dazu ausgebildet ist, an einer Phasengrenze (22) zwischen Wasser (26) und Betriebsmittel (12) zu schwimmen, und wobei die Selektionseinrichtung dazu ausgebildet ist, den Ausgangsanschluss (18) oder die entsprechende Ausgangsleitung (20) in Abhängigkeit von der Schwimmhöhe des Schwimmers (22) zu schließen oder zu öffnen.

6. Vakuumgerät nach Anspruch 5,
wobei der Schwimmer (22) selbst dazu ausgebildet ist, den Ausgangsanschluss (18) zu verschließen.

7. Vakuumgerät nach Anspruch 5 oder 6,
wobei die Selektionseinrichtung eine Positioniereinrichtung (24) für den Schwimmer (22) aufweist.

8. Vakuumgerät nach zumindest einem der Ansprüche 5 bis 7, wobei die Selektionseinrichtung einen Schalter aufweist und wobei der Schalter durch den Schwimmer (22) betätigbar ist.

9. Vakuumgerät nach zumindest einem der vorhergehenden Ansprüche, wobei die Selektionseinrichtung einen Sensor (40, 42) zum Ermitteln einer Füllstandsinformation aufweist.

10. Vakuumgerät nach Anspruch 9,
wobei der Sensor (40, 42) dazu ausgebildet ist, zu ermitteln, ob am Sensor (40, 42) Betriebsmittel (12) oder Wasser (26) vorhanden ist.

11. Vakuumgerät nach Anspruch 9 oder 10,
wobei die Selektionseinrichtung ein Schaltventil (32, 36) an zumindest einem der Ausgangsanschlüsse (18, 30) oder an oder in der entsprechenden Ausgangsleitung (20, 46) aufweist und wobei die Selektionseinrichtung dazu ausgebildet ist, das Schaltventil (32, 36) in Abhängigkeit von der Füllstandsinformation zu schalten.

12. Vakuumgerät nach zumindest einem der vorhergehenden Ansprüche, wobei das Reservoir (10) ein Schauglas aufweist.

13. Vakuumgerät nach zumindest einem der vorhergehenden Ansprüche, wobei das Vakuumgerät einen Betriebsmittelabscheider (14) aufweist, der zum Abscheiden des Betriebsmittels (12) aus einem Gasstrom (16) in das Reservoir (10) angeordnet ist.

## Claims

1. A vacuum device, namely a vacuum pump, comprising a reservoir (10) for an operating medium (12);
an outlet connector (18) arranged at or in the reservoir (10), wherein the outlet connector (18) connects the reservoir (10) to an operating medium return device; and
a selection device which is configured to selectively close or open the outlet connector (18) or an outlet line (20), which is connected via the outlet connector (18) to the reservoir (10), in dependence on whether the operating medium (12) or water (26) is present at the outlet connector (18), **characterized in that** the outlet connector is closed when water is present at it and the outlet connector is opened when the operating medium is present at it.

2. A vacuum device in accordance with claim 1,
wherein the outlet connector (18) is connected to a low pressure region via the outlet line (20).

3. A vacuum device in accordance with at least one of the preceding claims, wherein the outlet connector (18), which connects the reservoir (10) to the operating medium return device, is a first outlet connector, and wherein at least one second outlet connector (30), which in particular comprises a corresponding outgoing line (46) connected to the reservoir (10), is arranged at or in the reservoir (10) and is an outlet connector.

4. A vacuum device in accordance with at least one of the preceding claims, wherein at least one of the outlet connectors (18, 30) is oriented downwardly or upwardly.

5. A vacuum device in accordance with at least one of the preceding claims, wherein the selection device comprises a float (22) which is adapted to float at a phase boundary (22) between water (26) and the operating medium (12), and wherein the selection device is configured to close or open the outlet connector (18) or the corresponding outlet line (20) in dependence on the floating height of the float (22).

6. A vacuum device in accordance with claim 5,
wherein the float (22) is itself configured to close the outlet connector (18).

7. A vacuum device in accordance with claim 5 or claim 6,
wherein the selection device has a positioning device (24) for the float (22).

8. A vacuum device in accordance with at least one of the claims 5 to 7,
wherein the selection device has a switch, and wherein the switch is actuable by the float (22).

9. A vacuum device in accordance with at least one of the preceding claims, wherein the selection device has a sensor (40, 42) for determining filling level information.

10. A vacuum device in accordance with claim 9,
wherein the sensor (40, 42) is configured to determine whether the operating medium (12) or water (26) is present at the sensor (40, 42).

11. A vacuum device in accordance with claim 9 or claim 10,
wherein the selection device has a switch valve (32, 36) at at least one of the outlet connectors (18, 30) or at or in the corresponding outlet line (20, 46), and wherein the selection device is configured to switch the switch valve (32, 36) in dependence on the filling level information.

12. A vacuum device in accordance with at least one of the preceding claims, wherein the reservoir (10) has a sight glass.

13. A vacuum device in accordance with at least one of the preceding claims, wherein the vacuum device has an operating medium separator (14) which is provided for the separation of the operating medium (12) from a gas flow (16) into the reservoir (10).

## Revendications

1. Appareil à vide, à savoir pompe à vide, comportant un réservoir (10) pour un fluide de fonctionnement (12),
un raccord de sortie (18) disposé sur ou dans le réservoir (10), le raccord de sortie (18) reliant le réservoir (10) à un moyen de retour de fluide de fonctionnement, et
un moyen de sélection qui est réalisé pour fermer ou ouvrir sélectivement le raccord de sortie (18) ou une conduite de sortie (20), attachée au réservoir (10) par l'intermédiaire du raccord de sortie (18), en fonction de savoir si du fluide de fonctionnement (12) ou de l'eau (26) se présente au niveau du raccord de sortie (18),
**caractérisé en ce que**
le raccord de sortie est fermé lorsque de l'eau se présente au niveau de celui-ci, et le raccord de sortie est ouvert lorsque du fluide de fonctionnement se présente au niveau de celui-ci.

2. Appareil à vide selon la revendication 1,
dans lequel le raccord de sortie (18) est relié à une zone sous dépression par l'intermédiaire de la conduite de sortie (20).

3. Appareil à vide selon l'une au moins des revendications précédentes, dans lequel le raccord de sortie (18) reliant le réservoir (10) au moyen de retour de fluide de fonctionnement est un premier raccord de sortie, et au moins un second raccord de sortie (30) est disposé sur ou dans le réservoir (10), en particulier avec une conduite de sortie (46) correspondante attachée au réservoir (10), qui est un raccord d'évacuation.

4. Appareil à vide selon l'une au moins des revendications précédentes, dans lequel l'un au moins des raccords de sortie (18, 30) est orienté vers le bas ou vers le haut.

5. Appareil à vide selon l'une au moins des revendications précédentes, dans lequel le moyen de sélection comprend un flotteur (22) réalisé pour flotter à une limite de phase (22) entre l'eau (26) et le fluide de fonctionnement (12), et le moyen de sélection est réalisé pour fermer ou ouvrir le raccord de sortie (18) ou la conduite de sortie correspondante (20) en fonction de la hauteur de flottement du flotteur (22).

6. Appareil à vide selon la revendication 5,
dans lequel le flotteur (22) lui-même est réalisé pour fermer le raccord de sortie (18).

7. Appareil à vide selon la revendication 5 ou 6,
dans lequel le moyen de sélection comprend un moyen de positionnement (24) pour le flotteur (22).

8. Appareil à vide selon l'une au moins des revendications 5 à 7,
dans lequel le moyen de sélection comprend un interrupteur, et l'interrupteur peut être actionné par le flotteur (22).

9. Appareil à vide selon l'une au moins des revendications précédentes, dans lequel le moyen de sélection comprend un capteur (40, 42) pour déterminer une information de niveau de remplissage.

10. Appareil à vide selon la revendication 9,
dans lequel le capteur (40, 42) est réalisé pour déterminer si du fluide de fonctionnement (12) ou l'eau (26) se présente au niveau du capteur (40, 42).

11. Appareil à vide selon la revendication 9 ou 10,
dans lequel le moyen de sélection comprend une valve de commutation (32, 36) sur l'un au moins des raccords de sortie (18, 30) ou sur ou dans la conduite de sortie correspondante (20, 46), et
le moyen de sélection est réalisé pour commuter la valve de commutation (32, 36) en fonction de l'information de niveau de remplissage.

12. Appareil à vide selon l'une au moins des revendications précédentes, dans lequel le réservoir (10) comprend un voyant.

13. Appareil à vide selon l'une au moins des revendications précédentes, dans lequel l'appareil à vide comprend un séparateur de fluide de fonctionnement (14) qui est agencé dans le réservoir (10) pour séparer le fluide de fonctionnement (12) hors d'un flux de gaz (16).
